# EUROPEAN PATENT APPLICATION

(11) **EP 4 417 298 A1**
(43) Date of publication of application: **21.08.2024**
(21) Application number: 23850128.2
(22) Date of filing: 02.08.2023
(51) Int. Cl.: B01D 63/06, C10L 1/02, B01D 53/22, B01J 8/02

(54) **SEPARATION MEMBRANE MODULE**

(30) Priority: 02.08.2022 JP 2022123564
(71) Applicant: NGK Insulators, Ltd., Nagoya-shi, Aichi 467-8530 (JP)
(72) Inventor: IIDA, Kazuki, Nagoya-shi, Aichi 467-8530 (JP); SHIBAGAKI, Yukinari, Nagoya-shi, Aichi 467-8530 (JP); NAKAGAWA, Kosuke, Nagoya-shi, Aichi 467-8530 (JP); MAEHARA, Sota, Nagoya-shi, Aichi 467-8530 (JP); KAN, Hirofumi, Nagoya-shi, Aichi 467-8530 (JP)
(74) Representative: Müller-Boré & Partner Patentanwälte PartG mbB
(86) International application number: PCT/JP2023/028313
(87) International publication number: WO 2024/029574

(57) **Abstract**

A separation membrane module (1) includes: a tubular housing (20); a monolith type reactor (10) housed in the housing (20); and a first flow regulation portion (50) housed in the housing (20). The housing (20) has an inner circumferential surface (G1) and a sweep gas inlet (T4) formed in the inner circumferential surface (G1) and configured to allow a sweep gas to flow therethrough. The reactor (10) has an outer circumferential surface (F1) and a first slit (17) formed in the outer circumferential surface (F1) and configured to allow the sweep gas to flow therethrough. The first flow regulation portion (50) has a first flow regulation surface (H1) configured to regulate turbulence of a flow of the sweep gas between the sweep gas inlet (T4) and the first slit (17).

## Description

### TECHNICAL FIELD

The present invention relates to a separation membrane module.

### BACKGROUND ART

Separation membrane modules including a housing and a columnar membrane structure housed in the housing are conventionally known. Examples of the membrane structure include: a separation filter (see, for example, Patent Literature 1) configured to separate a predetermined component from a fluid mixture with use of a separation membrane; and a reactor (see, for example, Patent Literature 2) configured to separate a by-product generated as a result of a conversion reaction for converting a source gas into a liquid fuel with use of a separation membrane.

### CITATION LIST

### Patent Literature

Patent Literature 1: WO 2018/180095
Patent Literature 2: JP 2018-008940A

### SUMMARY

### TECHNICAL PROBLEM

A permeation-side space for collecting a permeating gas that has passed through a separation membrane needs to be provided between the membrane structure and the housing. It is possible to collect the permeating gas and control the temperature of the membrane structure by causing a sweep gas to flow through the permeation-side space. Therefore, there is demand to improve the flowability of the sweep gas.

Even in cases where the sweep gas is not used, there is demand to improve the flowability of the permeating gas in order to efficiently discharge the permeating gas that has passed through the separation membrane to the outside.

An object of the present invention is to provide a separation membrane module that can improve flowability of gas inside a housing.

### SOLUTION TO PROBLEM

A separation membrane module according to a first aspect includes: a tubular housing; a monolith type membrane structure housed in the housing; and a first flow regulation portion housed in the housing. The housing has an inner circumferential surface and a first opening formed in the inner circumferential surface and configured to allow a sweep gas to flow therethrough. The membrane structure has an outer circumferential surface and a first slit formed in the outer circumferential surface and configured to allow the sweep gas to flow therethrough. The first flow regulation portion has a first flow regulation surface configured to regulate turbulence of a flow of the sweep gas between the first opening and the first slit.

A separation membrane module according to a second aspect includes: a tubular housing; a monolith type membrane structure housed in the housing; and a first flow regulation portion housed in the housing. The membrane structure has an outer circumferential surface and a first slit formed in the outer circumferential surface and configured to allow a permeating gas that has passed through a separation membrane to flow out. The housing has an inner circumferential surface and a first opening formed in the inner circumferential surface and configured to allow the permeating gas to flow out. The first flow regulation portion has a first flow regulation surface configured to regulate a flow of the permeating gas between the first opening and the first slit.

A separation membrane module according to a third aspect includes: a tubular housing; a tubular type membrane structure housed in the housing; and a first flow regulation portion housed in the housing. The membrane structure has an outer circumferential. The housing has an inner circumferential surface and a first opening formed in the inner circumferential surface and configured to allow a gas to flow therethrough. The first flow regulation portion has a first flow regulation surface configured to regulate a flow of the gas between the first opening and the outer circumferential surface.

A separation membrane module according to a fourth aspect is the separation membrane module according to any one of the first through third aspects, wherein the first flow regulation surface is shaped so as to be farther from the first opening in a longitudinal direction of the membrane structure the closer the first flow regulation surface is to the membrane structure in a radial direction of the membrane structure.

A separation membrane module according to a fifth aspect is the separation membrane module according to any one of the first through fourth aspects, and further includes an annular first flange surrounding a first end portion of the membrane structure, wherein the first flow regulation portion is connected to the first flange.

A separation membrane module according to a sixth aspect is the separation membrane module according to the fifth aspect, wherein the first flow regulation portion and the first flange are formed as a single piece.

A separation membrane module according to a seventh aspect is the separation membrane module according to the fifth aspect, wherein the first flange is constituted by a ceramic material.

A separation membrane module according to an eighth aspect is the separation membrane module according to the first aspect and any one of the fourth through seventh aspects based on the first aspect, and further includes a second flow regulation portion housed in the housing. The housing has a second opening formed in the inner circumferential surface and configured to allow the sweep gas to flow therethrough. The membrane structure has a second slit formed in the outer circumferential surface and configured to allow the sweep gas to flow therethrough. The second flow regulation portion has a second flow regulation surface configured to regulate turbulence of a flow of the sweep gas between the second opening and the second slit.

A separation membrane module according to a ninth aspect is the separation membrane module according to the third aspect and any one of the fourth through sixth aspects based on the third aspect, and further includes a second flow regulation portion housed in the housing. The housing has a second opening formed in the inner circumferential surface and configured to allow the gas to flow therethrough. The second flow regulation portion has a second flow regulation surface configured to regulate a flow of the gas between the second opening and the outer circumferential surface.

A separation membrane module according to a tenth aspect is the separation membrane module according to the eighth or ninth aspect, wherein the second flow regulation surface is shaped so as to be farther from the second opening in a longitudinal direction of the membrane structure the closer the second flow regulation surface is to the second slit in a radial direction of the membrane structure.

A separation membrane module according to an eleventh aspect is the separation membrane module according to the eighth or ninth aspect, and further includes an annular second flange surrounding a second end portion of the membrane structure, wherein the second flow regulation portion is connected to the second flange.

A separation membrane module according to a twelfth aspect is the separation membrane module according to the eleventh aspect, wherein the second flow regulation portion and the second flange are formed as a single piece.

A separation membrane module according to a thirteenth aspect is the separation membrane module according to the eleventh aspect, wherein the second flange is constituted by a ceramic material.

A separation membrane module according to a fourteenth aspect is the separation membrane module according to any one of the first through thirteenth aspects, wherein the membrane structure is a reactor.

A separation membrane module according to a fifteenth aspect is the separation membrane module according to any one of the first through thirteenth aspects, wherein the membrane structure is a separation filter.

### ADVANTAGEOUS EFFECTS

According to the present invention, it is possible to provide a separation membrane module that can improve the flowability of gas inside a housing.

### BRIEF DESCRIPTION OF DRAWINGS

FIG. 1 is a cross-sectional view of a separation membrane module according to an embodiment.
FIG. 2 is a cross-sectional view taken along the line A-A shown in FIG. 1.
FIG. 3 is a cross-sectional view taken along the line B-B shown in FIG. 1.
FIG. 4 is an enlarged view of a portion shown in FIG. 1.
FIG. 5 is an enlarged view of a portion shown in FIG. 1.
FIG. 6 is a cross-sectional view of a separation membrane module according to Variation 2.
FIG. 7 is a cross-sectional view of a first flow regulation portion according to Variation 5.
FIG. 8 is a cross-sectional view of a first flow regulation portion according to Variation 5.
FIG. 9 is a cross-sectional view of a separation membrane module according to Variation 8.
FIG. 10 is a cross-sectional view of a separation membrane module according to Variation 9.
FIG. 11 is a cross-sectional view of a separation membrane module according to Variation 9.
FIG. 12 is a cross-sectional view of a separation membrane module according to Variation 10.
FIG. 13 is a cross-sectional view of a separation membrane module according to Variation 10.
FIG. 14 is a cross-sectional view of a separation membrane module according to Variation 10.
FIG. 15 is a cross-sectional view of a separation membrane module according to Variation 11.
FIG. 16 is a cross-sectional view of a separation membrane module according to Variation 11.
FIG. 17 is a cross-sectional view of a separation membrane module according to Variation 12.
FIG. 18 is a cross-sectional view of a separation membrane module according to Variation 12.
FIG. 19 is a cross-sectional view of a separation membrane module according to Variation 12.

### DESCRIPTION OF EMBODIMENTS

### Separation Membrane Module 1

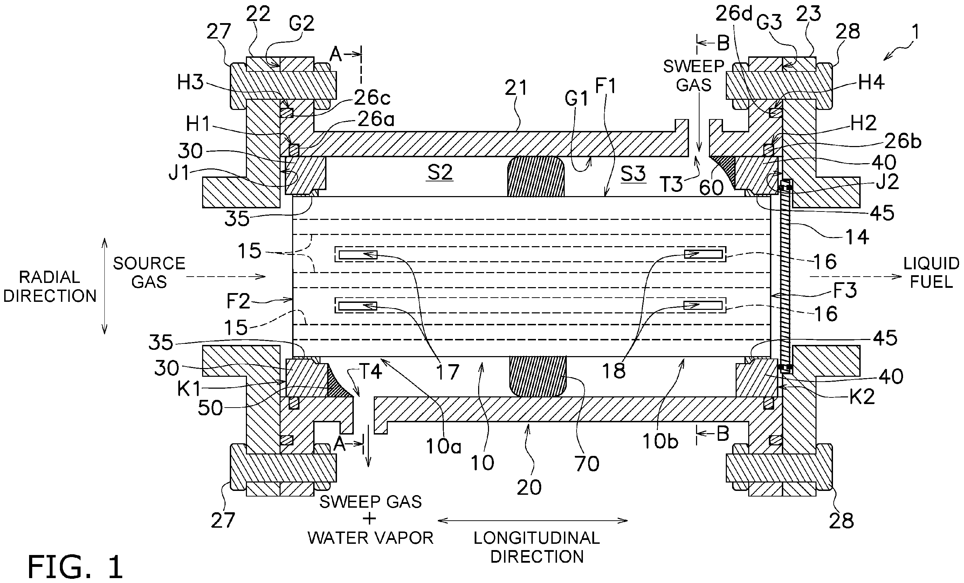

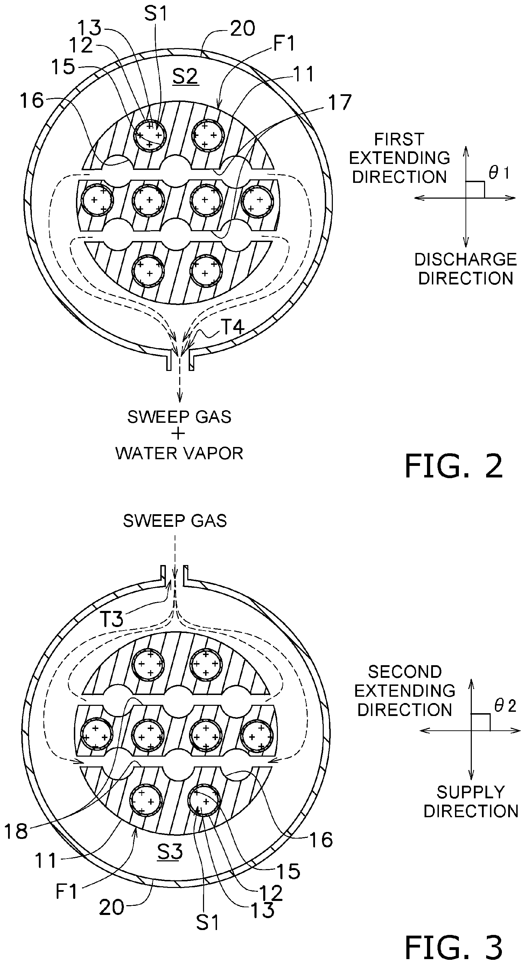

The following describes a separation membrane module 1 according to an embodiment. FIG. 1 is a schematic cross-sectional view showing a configuration of the separation membrane module 1. In FIG. 1, only a reactor 10 is shown in a side view. FIG. 2 is a cross-sectional view taken along the line A-A shown in FIG. 1. FIG. 3 is a cross-sectional view taken along the line B-B shown in FIG. 1.

As shown in FIG. 1, the separation membrane module 1 includes the reactor 10, a housing 20, a first flange 30, a second flange 40, a first flow regulation portion 50, a second flow regulation portion 60, and a flow stopper 70. The reactor 10 is an example of a "membrane structure" in the present invention.

### Reactor 10

The reactor 10 is housed in the housing 20. The reactor 10 has a columnar shape extending in a longitudinal direction. The external shape of the reactor 10 in the present embodiment is a circular column shape, but the external shape of the reactor 10 is not particularly limited, and may also be an elliptical column shape or a polygonal column shape, for example.

The reactor 10 is a so-called membrane reactor for converting a source gas into a liquid fuel. The source gas contains at least hydrogen and carbon dioxide. The source gas may also contain carbon monoxide. The source gas may be a so-called synthesis gas (syngas). The liquid fuel is a fuel that is in a liquid state at normal temperature and normal pressure or a fuel that can be liquefied at normal temperature in a pressurized state. Examples of fuels that are in a liquid state at normal temperature and normal pressure include methanol, ethanol, a liquid fuel represented by CₙH₂₍ₘ₋₂ₙ₎ (m is an integer smaller than 90, and n is an integer smaller than 30), and a mixture of these. Examples of fuels that can be liquefied at normal temperature in a pressurized state include propane, butane, and a mixture of these.

For example, a reaction formula (1) for the synthesis of methanol through catalytic hydrogenation of a source gas containing hydrogen and carbon dioxide in the presence of a catalyst is expressed as follows.

CO₂+3H₂ ⇔ CH₃OH+H₂O (1)

The above reaction is an equilibrium reaction, and the reactor 10 can shift the reaction equilibrium to the product side by separating water vapor, which is a product of the conversion reaction. In order to increase the conversion efficiency and the reaction rate, the conversion reaction is preferably carried out at a high temperature and a high pressure (e.g., 180°C or higher and 2 MPa or higher). The liquid fuel is in a gaseous state when it is synthesized, and remains in the gaseous state at least until the liquid fuel flows out from the reactor 10. It is preferable that the reactor 10 has heat resistance and pressure resistance suitable for synthesis conditions of the desired liquid fuel.

The reactor 10 according to the present embodiment is a so-called monolith type reactor. The "monolith type" is in reference to a shape that includes a plurality of cells extending through the reactor in the longitudinal direction, and encompasses a honeycomb type.

As shown in FIG. 1, the reactor 10 has an outer circumferential surface F1, a first end surface F2, and a second end surface F3. The outer circumferential surface F1 is a side surface of the columnar reactor 10. The outer circumferential surface F1 continues to the first end surface F2 and the second end surface F3. The first end surface F2 is an end surface of the columnar reactor 10. First flow paths 15, which will be described later, are open in the first end surface F2. The source gas flows into the first flow paths 15. The second end surface F3 is another end surface of the columnar reactor 10. The first flow paths 15 are open in the second end surface F3. The liquid fuel flows out from the first flow paths 15 to the outside.

As shown in FIG. 1, the reactor 10 includes a first end portion 10a and a second end portion 10b. The first end portion 10a is an end portion of the reactor 10 in the longitudinal direction. The first end portion 10a includes the first end surface F2 described above. The second end portion 10b is another end portion of the reactor 10 in the longitudinal direction. The second end portion 10b includes the second end surface F3 described above.

As shown in FIGS. 1 to 3, the reactor 10 includes a plurality of first flow paths 15, a plurality of second flow paths 16, first slits 17, and second slits 18.

The first flow paths 15 extend through the reactor 10 in the longitudinal direction. The first flow paths 15 are open in the first and second end surfaces F2 and F3. The first flow paths 15 are spaces on the inner side of a separation membrane 12, which will be described later. As shown in FIGS. 2 and 3, the inside of the first flow paths 15 is a source gas supply space S1. A catalyst 13, which will be described later, is disposed in the first flow paths 15 (i.e., the source gas supply space S1). The number and positions of first flow paths 15 can be changed as appropriate.

The second flow paths 16 are formed inside the reactor 10. The second flow paths 16 extend in the longitudinal direction. The second flow paths 16 are closed in the first and second end surfaces F2 and F3. The number and positions of second flow paths 16 can be changed as appropriate.

The first slits 17 are formed in the first end portion 10a of the reactor 10. As shown in FIG. 2, each of the first slits 17 extends through two or more second flow paths 16 in a radial direction. Both ends of each of the first slits 17 are open in the outer circumferential surface F1. Each of the first slits 17 is in communication with two or more second flow paths 16 arranged side by side in the radial direction and a sweep gas discharge space S2, which will be described later.

As shown in FIG. 2, a first extending direction of the first slits 17 extending inside the reactor 10 is preferably inclined with respect to a discharge direction of a sweep gas that is discharged to the outside from a sweep gas outlet T4, or the first extending direction is preferably orthogonal to the discharge direction. Specifically, an angle θ1 of the first extending direction relative to the discharge direction is preferably 45° or more and 135° or less. With this configuration, it is possible to suppress maldistribution of gas flows from the openings of the first slits 17 toward the sweep gas outlet T4, and accordingly, it is possible to suppress maldistribution of flows of the sweep gas in the sweep gas discharge space S2.

The second slits 18 are formed in the second end portion 10b of the reactor 10. As shown in FIG. 3, each of the second slits 18 extends through two or more second flow paths 16 in a radial direction. Both ends of each of the second slits 18 are open in the outer circumferential surface F1. Each of the second slits 18 is in communication with two or more second flow paths 16 arranged side by side in the radial direction and a sweep gas supply space S3, which will be described later.

As shown in FIG. 3, a second extending direction of the second slits 18 extending inside the reactor 10 is preferably inclined with respect to a supply direction of the sweep gas that is supplied from a sweep gas inlet T3 to the sweep gas supply space S3, or the second extending direction is preferably orthogonal to the supply direction. Specifically, an angle θ2 of the second extending direction relative to the supply direction is preferably 45° or more and 135° or less. With this configuration, it is possible to suppress maldistribution of gas flows from the sweep gas inlet T3 toward the openings of the second slits 18, and accordingly, it is possible to suppress maldistribution of flows of the sweep gas in the sweep gas supply space S3.

As shown in FIGS. 2 and 3, the reactor 10 is constituted by a porous support 11, the separation membrane 12, the catalyst 13, and a catalyst stopper 14.

The porous support 11 has a tubular shape extending in the longitudinal direction. The porous support 11 is constituted by a porous material. A ceramic material, a metallic material, a resin material, a composite member of these, or the like can be used as the porous material, and a ceramic material is particularly favorable. Alumina (Al₂O₃), titania (TiO₂), mullite (Al₂O₃·SiO₂), potsherd, cordierite (Mg₂Al₄Si₅O₁₈), a composite material including two or more of these, or the like can be used as an aggregate for the ceramic material. Alumina is favorable in view of availability, clay stability, and corrosion resistance. At least one of titania, mullite, easily sinterable alumina, silica, glass frit, a clay mineral, and easily sinterable cordierite can be used as an inorganic binder for the ceramic material. However, the ceramic material need not necessarily contain an inorganic binder.

The average pore diameter of the porous support 11 can be set to 5 µm or more and 25 µm or less. The average pore diameter of the porous support 11 can be measured using a mercury intrusion method. The porosity of the porous support 11 can be set to 25% or more and 50% or less. The average particle diameter of the porous material can be set to 1 µm or more and 100 µm or less. The average particle diameter refers to the arithmetic mean of the maximum diameters of 30 measurement target particles (randomly selected), as measured through cross-sectional microstructural observation using a scanning electron microscope (SEM).

The separation membrane 12 is supported by the porous support 11. The separation membrane 12 has a tubular shape extending in the longitudinal direction. The first flow paths 15 (i.e., the source gas supply space S1) described above are on the inner side of the separation membrane 12.

The separation membrane 12 allows water vapor, which is a product generated as a result of the conversion reaction for converting the source gas into the liquid fuel, to pass therethrough. Thus, the reaction equilibrium of the above formula (1) can be shifted to the product side by utilizing an equilibrium shift effect. Water vapor passing through the separation membrane 12 in the present embodiment is an example of a "permeating gas" in the present invention.

It is preferable that the separation membrane 12 has a water vapor permeability coefficient of 100 nmol/(s·Pa·m²) or more. The water vapor permeability coefficient can be obtained using a known method (see Ind. Eng. Chem. Res., 40, 163-175(2001)).

It is preferable that the separation membrane 12 has a separation coefficient of 100 or more. The greater the separation coefficient, the easier it is for water vapor to pass through the separation membrane 12 and the more difficult it is for components (hydrogen, carbon dioxide, the liquid fuel, etc.) other than water vapor to pass through the separation membrane 12. The separation coefficient can be obtained using a known method (see FIG. 1 in "Separation and Purification Technology 239 (2020) 116533").

The separation membrane 12 may be an inorganic membrane. Inorganic membranes have heat resistance, pressure resistance, and water vapor resistance and thus are preferable. Examples of inorganic membranes include zeolite membranes, silica membranes, alumina membranes, and composite membranes thereof. In particular, LTA-type zeolite membranes in which a molar ratio (Si/Al) between silicon element (Si) and aluminum element (Al) is 1.0 or more and 3.0 or less have excellent water vapor permeability and thus are favorable.

The catalyst 13 is disposed in the first flow paths 15 (i.e., the source gas supply space S1). It is preferable that the first flow paths 15 are filled with the catalyst 13, but the catalyst 13 may also be disposed in such a manner as to form a layer or islands on the surface of the separation membrane 12. The catalyst 13 promotes the conversion reaction for converting the source gas into the liquid fuel shown in the above formula (1).

The catalyst 13 may be a known catalyst suitable for the conversion reaction for converting the source gas into the liquid fuel. Examples of the catalyst 13 include metal catalysts (copper, palladium, etc.), oxide catalysts (zinc oxide, zirconia, gallium oxide, etc.), and composites of these (copper-zinc oxide, copper-zinc oxide-alumina, copper-zinc oxide-chromium oxide-alumina, copper-cobalt-titania, and these catalysts modified with palladium, etc.).

The catalyst stopper 14 is disposed so as to cover the openings of the first flow paths 15 in the second end surface F3. The catalyst stopper 14 prevents the catalyst 13 from leaking from the openings of the first flow paths 15. The catalyst stopper 14 is configured so as not to prevent the liquid fuel from flowing out, while preventing leakage of the catalyst 13. The catalyst stopper 14 may be a net-like member, a plate having a hole, or the like. In the present embodiment, the catalyst stopper 14 is fixed by being sandwiched between the housing 20 and the second flange 40, but the catalyst stopper 14 may also be attached to the second end surface F3 of the reactor 10.

However, in a case where leakage of the catalyst 13 is unlikely to occur (for example, in the case where the catalyst 13 is disposed in such a manner as to form a layer or islands on the surface of the separation membrane 12), the reactor 10 need not include the catalyst stopper 14.

When the source gas is supplied to the first flow paths 15 (i.e., the source gas supply space S 1) of the reactor 10, the source gas is converted into the liquid fuel due to the action of the catalyst 13, and water vapor is generated. The liquid fuel flows out from the first flow paths 15. The water vapor passes through the separation membrane 12 and enters the second flow paths 16. The water vapor that has entered the second flow paths 16 is discharged to the sweep gas discharge space S2 via the first slits 17 together with the sweep gas flowing from the sweep gas supply space S3 into the second flow paths 16 via the second slits 18.

### Housing 20

The housing 20 has a tubular shape as a whole. The housing 20 accommodates the reactor 10. The housing 20 has a structure that can withstand the conversion reaction carried out at a high temperature and a high pressure (e.g., 180°C or higher and 2 MPa or higher). In a case where the source gas and/or the sweep gas contains hydrogen, it is preferable that the housing 20 is constituted by a material that is resistant to hydrogen embrittlement. The housing 20 can be constituted mainly by a metallic material (stainless steel or the like).

As shown in FIG. 1, the housing 20 is constituted by a tubular body 21, a first end plate 22, and a second end plate 23.

The tubular body 21 has a tubular shape extending in the longitudinal direction. Both end portions of the tubular body 21 are shaped as flanges by increasing the diameter of the tubular body 21.

The tubular body 21 has an inner circumferential surface G1, a first end surface G2, a second end surface G3, the sweep gas inlet T3, and the sweep gas outlet T4. Each of the sweep gas inlet T3 and the sweep gas inlet T4 is an example of a "first opening" or a "second opening" in the present invention.

The inner circumferential surface G1 faces the outer circumferential surface F1 of the reactor 10 and is spaced apart from the outer circumferential surface F1. The space between the inner circumferential surface G1 and the outer circumferential surface F1 is the sweep gas discharge space S2 and the sweep gas supply space S3 through which the sweep gas flows.

An annular first recess H1 is formed at an end of the inner circumferential surface G1. An annular first elastic member 26a is disposed in the first recess H1. The first elastic member 26a may be an O-ring made of expanded graphite or rubber, for example. The first elastic member 26a is in close contact with the first flange 30, which will be described later. Thus, a seal is formed between the tubular body 21 and the first flange 30.

An annular second recess H2 is formed at another end of the inner circumferential surface G1. An annular second elastic member 26b is disposed in the second recess H2. The second elastic member 26b may be an O-ring made of expanded graphite or rubber, for example. The second elastic member 26b is in close contact with the second flange 40, which will be described later. Thus, a seal is formed between the tubular body 21 and the second flange 40.

An annular first recess H3 is formed in the first end surface G2. A third elastic member 26c is disposed in the first recess H3. The third elastic member 26c may be an O-ring made of expanded graphite or rubber, for example. The third elastic member 26c is in close contact with the first end plate 22. Thus, a seal is formed between the tubular body 21 and the first end plate 22.

An annular second recess H4 is formed in the second end surface G3. A fourth elastic member 26d is disposed in the second recess H4. The fourth elastic member 26d may be an O-ring made of expanded graphite or rubber, for example. The fourth elastic member 26d is in close contact with the second end plate 23. Thus, a seal is formed between the tubular body 21 and the second end plate 23.

The sweep gas inlet T3 is formed in the inner circumferential surface G1. In the present embodiment, the sweep gas inlet T3 is an opening for supplying the sweep gas to the sweep gas supply space S3. The sweep gas outlet T4 is formed in the inner circumferential surface G1. In the present embodiment, the sweep gas outlet T4 is an opening for discharging the sweep gas that has taken on water vapor, from the sweep gas discharge space S2. In the present embodiment, the sweep gas inlet T3 and the sweep gas outlet T4 are disposed along straight lines intersecting an axis of the reactor 10 in a cross-sectional view. With this configuration, the length of a flow path of the sweep gas in the sweep gas discharge space S2 and the length of a flow path of the sweep gas in the sweep gas supply space S3 can be made equivalent to each other, and accordingly, it is possible to suppress maldistribution of flows of the sweep gas. However, the positional relationship between the sweep gas inlet T3 and the sweep gas outlet T4 can be changed as appropriate.

Hydrogen and/or carbon dioxide can be used as the sweep gas. Alternatively, inert gas (e.g., nitrogen) or air may be used as the sweep gas.

The first end plate 22 is an annular plate member. A center portion of the first end plate 22 is shaped as a flange by increasing the diameter of the first end plate 22. The first end plate 22 has a first facing surface J1. The first facing surface J1 faces the first end surface F2 of the reactor 10 and an outer end surface K1 of the first flange 30, which will be described later. In the present embodiment, the first facing surface J1 is spaced apart from the first end surface F2 of the reactor 10 and the outer end surface K1 of the first flange 30. The first facing surface J1 is in contact with the first end surface G2 of the tubular body 21.

The first end plate 22 is connected to the tubular body 21 with use of a plurality of fixing members 27. The fixing members 27 are constituted by a bolt and a nut, for example. The first end plate 22 comes into close contact with the third elastic member 26c.

The second end plate 23 is an annular plate member. A center portion of the second end plate 23 is shaped as a flange by increasing the diameter of the second end plate 23. The second end plate 23 has a second facing surface J2. The second facing surface J2 faces the second end surface F3 of the reactor 10 and an end surface K2 of the second flange 40, which will be described later. In the present embodiment, the second facing surface J2 is spaced apart from the second end surface F3 of the reactor 10 and the end surface K2 of the second flange 40. The second facing surface J2 is in contact with the second end surface G3 of the tubular body 21.

The second end plate 23 is connected to the tubular body 21 with use of a plurality of fixing members 28. The fixing members 28 are constituted by a bolt and a nut, for example. The second end plate 23 comes into close contact with the fourth elastic member 26d.

### First Flange 30

The first flange 30 is attached to the reactor 10. The first flange 30 serves as a spacer for forming the sweep gas discharge space S2 between the reactor 10 and the tubular body 21. The first flange 30 has an annular shape. The first flange 30 surrounds the first end portion 10a of the reactor 10. The first flange 30 is fitted into an end portion of the tubular body 21. The first flange 30 supports the first end portion 10a of the reactor 10 at a position spaced apart from the tubular body 21.

The first flange 30 is constituted by a dense ceramic material. Examples of the ceramic material include alumina, zirconia, silicon carbide, aluminum nitride, cordierite, and a composite material including two or more of these. The first flange 30 needs to be air-tight and liquid-tight. Accordingly, the porosity of the first flange 30 is preferably 10.0% or less, and more preferably 5.0% or less.

The first flange 30 is joined to the reactor 10 with use of a first joining material 35. The first joining material 35 is disposed in a gap between the first flange 30 and the reactor 10. The first joining material 35 is only required to ensure joining strength between the first flange 30 and the reactor 10 and is disposed in at least a portion of the gap between the first flange 30 and the reactor 10.

Crystallized glass, amorphous glass, a brazing material, ceramics, or the like can be used as the first joining material 35, and crystallized glass is particularly preferable in view of heat resistance and pressure resistance.

As the crystallized glass, it is possible to use SiO₂-B₂O₃-based, SiO₂-CaO-based, SiO₂-Al₂O₃-based, SiC₂-MgO-based, SiO₂-ZnO-BaO-based, SiO₂-B₂O₃-CaO-based, SiO₂-MgO-CaO-based, SiO₂-Al₂O₃-B₂O₃-based, or SiO₂-MgO-Al₂O₃-based crystallized glass, for example. Note that "crystallized glass" referred to in the present specification means glass in which a percentage of "the volume of a crystal phase" to the whole volume (i.e., degree of crystallinity) is 60% or more and a percentage of "the volume of an amorphous phase and impurities" to the whole volume is less than 40%.

The first flange 30 is preferably in contact with the tubular body 21 and the first end plate 22, but a portion of the first flange 30 may be spaced apart from the tubular body 21 and the first end plate 22.

### Second Flange 40

The second flange 40 is attached to the reactor 10. The second flange 40 is disposed on the side opposite to the first flange 30. The second flange 40 serves as a spacer for forming the sweep gas supply space S3 between the reactor 10 and the tubular body 21. The second flange 40 has an annular shape. The second flange 40 surrounds the second end portion 10b of the reactor 10. The second flange 40 is fitted into another end portion of the tubular body 21. The second flange 40 supports the second end portion 10b of the reactor 10 at a position spaced apart from the tubular body 21.

The second flange 40 is constituted by a dense ceramic material. Examples of the ceramic material include alumina, zirconia, silicon carbide, aluminum nitride, cordierite, and a composite material including two or more of these. The second flange 40 needs to be air-tight and liquid-tight. Accordingly, the porosity of the second flange 40 is preferably 10.0% or less, and more preferably 5.0% or less.

The second flange 40 is joined to the reactor 10 with use of a second joining material 45. The second joining material 45 is disposed in a gap between the second flange 40 and the reactor 10. The second joining material 45 is only required to ensure joining strength between the second flange 40 and the reactor 10 and is disposed in at least a portion of the gap between the second flange 40 and the reactor 10.

Crystallized glass, amorphous glass, a brazing material, ceramics, or the like can be used as the second joining material 45, and crystallized glass is particularly preferable in view of heat resistance and pressure resistance.

### First Flow Regulation Portion 50

The first flow regulation portion 50 regulates flows of the sweep gas to be discharged from the sweep gas discharge space S2. The first flow regulation portion 50 is disposed in the vicinity of the sweep gas outlet T4 formed in the inner circumferential surface G1 of the housing 20.

The first flow regulation portion 50 is disposed inward of the first flange 30 in the longitudinal direction. A distance between the center of the reactor 10 in the longitudinal direction and the first flow regulation portion 50 is shorter than a distance between the center of the reactor 10 in the longitudinal direction and the first flange 30. The first flow regulation portion 50 is disposed between the reactor 10 and the sweep gas outlet T4 in a radial direction.

The first flow regulation portion 50 is joined to either the first flange 30 or the housing 20. There is no particular limitation on the method for joining the first flow regulation portion 50, but a joining material such as the crystallized glass described above can be used, for example.

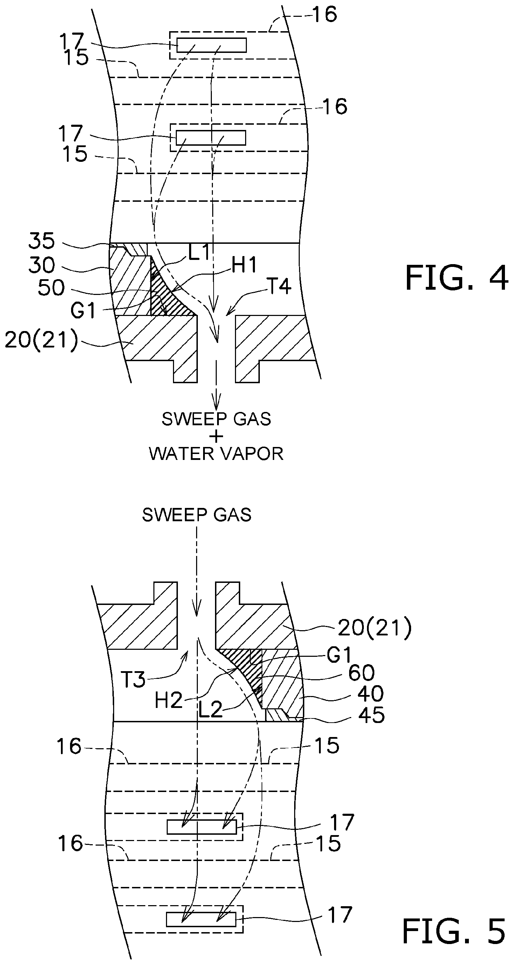

Here, FIG. 4 is an enlarged view of a portion shown in FIG. 1. As shown in FIG. 4, the first flow regulation portion 50 has a first flow regulation surface H1. The first flow regulation surface H1 faces the sweep gas discharge space S2. In the present embodiment, the first flow regulation surface H1 is a concave surface.

The first flow regulation surface H1 regulates flows of the sweep gas between the sweep gas outlet T4 and the first slits 17. Specifically, as shown in FIG. 4, the first flow regulation surface H1 guides the sweep gas that spreads in the longitudinal direction while flowing from the first slits 17, toward the sweep gas outlet T4. Thus, flowability of the sweep gas from the first slits 17 toward the sweep gas outlet T4 can be improved. Specifically, it is possible to suppress the occurrence of a situation in which flowability of the sweep gas is impaired by a step between the first flange 30 and the housing 20. Accordingly, it is possible to suppress stagnation of the sweep gas on the step and maldistribution of flows of the sweep gas in the sweep gas discharge space S2. As a result, water vapor can be efficiently discharged, and the temperature of the reactor 10 can be easily controlled.

In the present embodiment, the first flow regulation portion 50 covers the entire region of the inner circumferential surface G1 of the housing 20 between the first flange 30 and the sweep gas outlet T4, but at least a portion of this region may be exposed. Also, the first flow regulation portion 50 covers an entire inner end surface L1 of the first flange 30, but at least a portion of the inner end surface L1 may be exposed. Accordingly, the shape and position of the first flow regulation surface H1 can be changed as appropriate as long as the first flow regulation surface H1 regulates flows of the sweep gas.

### Second Flow Regulation Portion 60

The second flow regulation portion 60 regulates flows of the sweep gas supplied to the sweep gas supply space S3. The second flow regulation portion 60 is disposed in the vicinity of the sweep gas inlet T3 formed in the inner circumferential surface G1 of the housing 20.

The second flow regulation portion 60 is disposed inward of the second flange 40 in the longitudinal direction. A distance between the center of the reactor 10 in the longitudinal direction and the second flow regulation portion 60 is shorter than a distance between the center of the reactor 10 in the longitudinal direction and the second flange 40. The second flow regulation portion 60 is disposed between the reactor 10 and the sweep gas inlet T3 in a radial direction.

The second flow regulation portion 60 is joined to either the second flange 40 or the housing 20. There is no particular limitation on the method for joining the second flow regulation portion 60, but a joining material such as the crystallized glass described above can be used, for example. For reasons relating to assembly of the separation membrane module 1, if the first flow regulation portion 50 is joined to the housing 20, it is not possible to join the second flow regulation portion 60 to the housing 20, and if the second flow regulation portion 60 is joined to the housing 20, it is not possible to join the first flow regulation portion 50 to the housing 20.

Here, FIG. 5 is an enlarged view of a portion shown in FIG. 1. As shown in FIG. 5, the second flow regulation portion 60 has a second flow regulation surface H2. The second flow regulation surface H2 faces the sweep gas supply space S3. In the present embodiment, the second flow regulation surface H2 is a concave surface.

The second flow regulation surface H2 regulates flows of the sweep gas between the sweep gas inlet T3 and the second slits 18. Specifically, as shown in FIG. 5, the second flow regulation surface H2 guides the sweep gas that spreads in the longitudinal direction while flowing from the sweep gas inlet T3, toward the second slits 18. Thus, flowability of the sweep gas from the sweep gas inlet T3 toward the second slits 18 can be improved. Specifically, it is possible to suppress the occurrence of a situation in which flowability of the sweep gas is impaired by a step between the second flange 40 and the housing 20. Accordingly, it is possible to suppress stagnation of the sweep gas on the step and maldistribution of flows of the sweep gas in the sweep gas supply space S3.

In the present embodiment, the second flow regulation portion 60 covers the entire region of the inner circumferential surface G1 of the housing 20 between the second flange 40 and the sweep gas inlet T3, but at least a portion of this region may be exposed. Also, the second flow regulation portion 60 covers an entire inner end surface L2 of the second flange 40, but at least a portion of the inner end surface L2 may be exposed. Accordingly, the shape and position of the second flow regulation surface H2 can be changed as appropriate as long as the second flow regulation surface H2 regulates flows of the sweep gas.

### Flow Stopper 70

The flow stopper 70 has an annular shape. The flow stopper 70 is disposed between the reactor 10 and the housing 20. The position of the flow stopper 70 in the longitudinal direction can be changed as appropriate.

The flow stopper 70 partitions the space between the reactor 10 and the housing 20 into the sweep gas discharge space S2 and the sweep gas supply space S3. The flow stopper 70 suppresses direct flow of the sweep gas between the sweep gas discharge space S2 and the sweep gas supply space S3. The flow stopper 70 is only required to be capable of suppressing the passage of the sweep gas therethrough, and need not serve as a hermetic seal between the reactor 10 and the housing 20. The flow stopper 50 can be made of expanded graphite, rubber, resin, metal, or the like.

### Assembly of Separation Membrane Module 1

Steps for assembling the separation membrane module 1 include: a step of producing a reactor assembly by joining the first and second flanges 30 and 40 to the reactor 10; and a step of housing the reactor assembly in the housing 20.

The step of producing a reactor assembly includes: a first step of forming molded bodies of the joining materials; a second step of attaching the flanges; and a third step of heating the molded bodies of the joining materials. In the first step, a molded body of the first joining material 70 is formed on the first end portion 10a of the reactor 10, and a molded body of the second joining material 80 is formed on the second end portion 10b of the reactor 10. In the second step, the first flange 30 is attached in such a manner as to surround the molded body of the first joining material 70, and the second flange 40 is attached in such a manner as to surround the molded body of the second joining material 80. At this time, it is preferable to join the first flow regulation portion 50 to the first flange 30 in advance and join the second flow regulation portion 60 to the second flange 40 in advance. In the third step, the molded bodies of the first and second joining materials 70 and 80 are heated to cause crystal growth or melting, and thereafter cooled to room temperature, and thus the first and second joining materials 70 and 80 are formed. Through the above steps, the reactor assembly in which the first and second flanges 30 and 40 are joined to the reactor 10 via the first and second joining materials 70 and 80 is completed.

Next, the step of housing the reactor assembly includes: a fourth step of inserting the reactor assembly; a fifth step of attaching the elastic members; and a sixth step of connecting the end plates. In the fourth step, after the reactor assembly is inserted into the tubular body 21, positioning of both ends of the reactor assembly is performed. In the fifth step, the first through fourth elastic members 26a to 26d are respectively fitted into the first through fourth recesses H1 to H4 in the tubular body 21. In the sixth step, the first end plate 22 is connected to the tubular body 21 with use of the fixing members 27, and the second end plate 23 is connected to the tubular body 21 with use of the fixing members 28. Thus, the separation membrane module 1 in which the reactor assembly is housed in the housing 20 is completed.

### Variations of Embodiment

Although an embodiment of the present invention has been described, the present invention is not limited to the above embodiment, and various changes can be made within a scope not departing from the gist of the present invention.

### Variation 1

In the above embodiment, a case where the reactor 10 is used as the membrane structure is described, but a separation filter may also be used as the membrane structure. The separation filter has a configuration similar to that of the reactor 10, except that a separation membrane that allows a desired component contained in a fluid mixture to pass therethrough is used instead of the separation membrane 12 that allows water vapor to pass therethrough, and the separation filter does not include the catalyst 13. In the case where the separation filter is used as the membrane structure as well, use of the separation filter under high-temperature and high-pressure conditions is assumed in the present invention.

Note that, in the case where the separation filter is used as the membrane structure, reaction heat is not generated and the need to control the temperature is low. Accordingly, the component that has passed through the separation membrane may be discharged from the sweep gas outlet T4 by making the pressure on the sweep gas outlet T4 side lower than the pressure on the sweep gas inlet T3 side.

### Variation 2

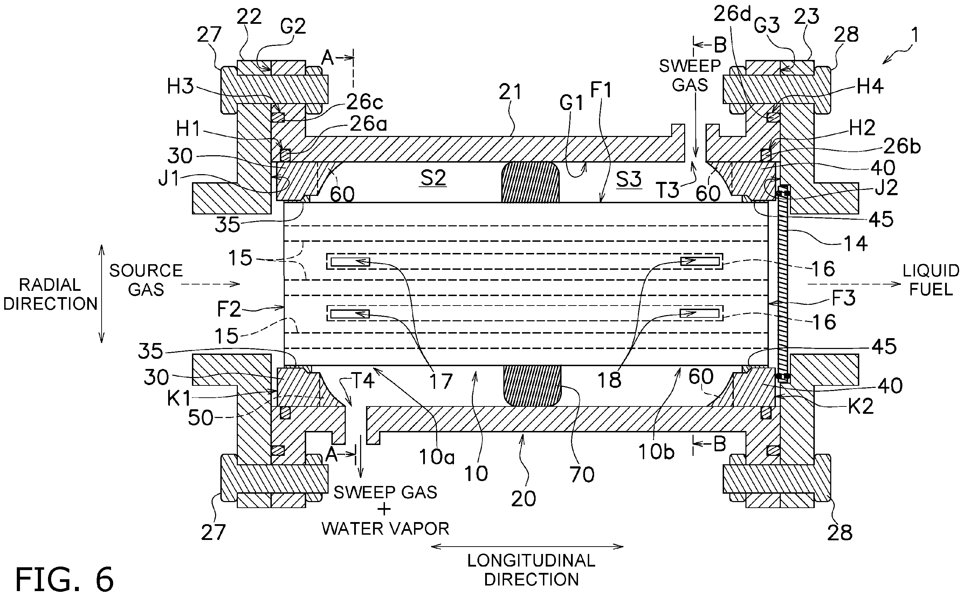

In the above embodiment, the first flow regulation portion 50 is separate from the first flange 30, but the first flow regulation portion 50 and the first flange 30 may be formed as a single piece as shown in FIG. 6. In the case where the first flow regulation portion 50 and the first flange 30 are formed as a single piece, the first flow regulation portion 50 can be more easily handled in the steps for assembling the separation membrane module 1.

Likewise, in the above embodiment, the second flow regulation portion 60 is separate from the second flange 40, but the second flow regulation portion 60 and the second flange 40 may be formed as a single piece as shown in FIG. 6.

### Variation 3

In the above embodiment, the separation membrane module 1 includes both the first flow regulation portion 50 and the second flow regulation portion 60, but a configuration is also possible in which the separation membrane module 1 includes only one of the first flow regulation portion 50 and the second flow regulation portion 60.

### Variation 4

In the above embodiment, the sweep gas flows through the second flow paths 16 from the second end portion 10b side toward the first end portion 10a side of the reactor 10, but there is no limitation to this configuration. The sweep gas may flow through the second flow paths 16 from the first end portion 10a side toward the second end portion 10b side of the reactor 10. In this case, the positions of the sweep gas inlet T3 and the sweep gas outlet T4 are reversed, but there is no need to make any other change in the configuration.

### Variation 5

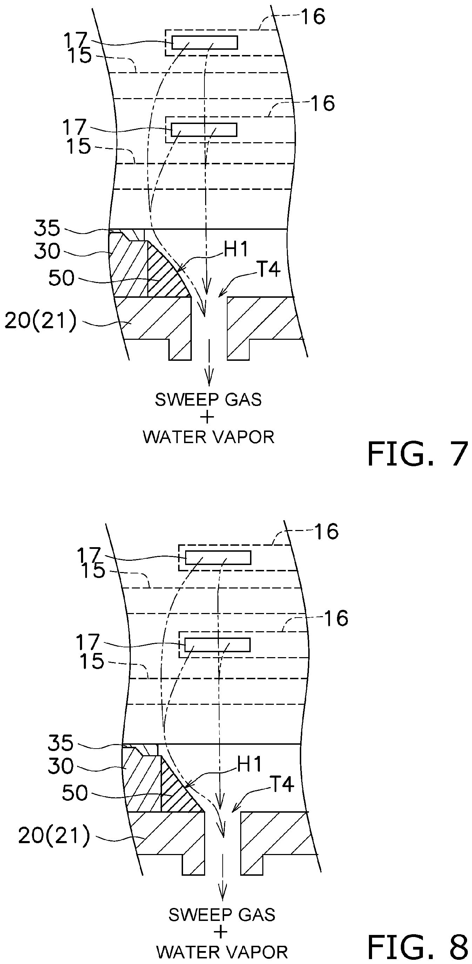

In the above embodiment, the first flow regulation surface H1 of the first flow regulation portion 50 is a concave surface, but there is no limitation to this configuration. The first flow regulation surface H1 may also be a convex surface as shown in FIG. 7 or a flat surface as shown in FIG. 8. Alternatively, the first flow regulation surface H1 may also be a rough surface including two or more of a concave surface, a convex surface, and a flat surface continuous to each other. Accordingly, the first flow regulation surface H1 may include a step in at least a portion thereof. Even in the case where the first flow regulation surface H1 includes a step in at least a portion thereof, flowability of gas can be improved when compared with a case where the first flow regulation surface H1 is not provided.

Likewise, in the above embodiment, the second flow regulation surface H2 of the second flow regulation portion 60 is a concave surface, but the second flow regulation surface H2 may also be a convex surface, a flat surface, or a rough surface.

### Variation 6

In the above embodiment, the separation membrane 12 allows water vapor, which is one of the products of the conversion reaction for converting the source gas into the liquid fuel, to pass therethrough, but there is no limitation to this configuration. The separation membrane 12 may allow the liquid fuel generated as a result of the conversion reaction for converting the source gas into the liquid fuel to pass therethrough. In this case as well, the reaction equilibrium of the above formula (1) can be shifted to the product side.

Also, in the case where the separation membrane 12 allows the liquid fuel to pass therethrough, the reaction equilibrium can be shifted to the product side even when the liquid fuel is generated as a result of a reaction in which no water vapor is generated as a by-product (e.g., 2H₂+CO ⇄ CH₃OH).

### Variation 7

The first flow regulation portion 50 may be an annular member. In this case, the first flow regulation portion 50 may be separate from the first flange 30, or the first flow regulation portion 50 and the first flange 30 may be formed as a single piece as shown in FIG. 6. Likewise, the second flow regulation portion 60 may be an annular member. In this case, the second flow regulation portion 60 may be separate from the second flange 40, or the second flow regulation portion 60 and the second flange 40 may be formed as a single piece as shown in FIG. 6.

### Variation 8

In the above embodiment, the monolith type reactor 10 is described as an example of the membrane structure, but it is also possible to use a tubular type reactor. In a case where a separation filter is used as the membrane structure, it is possible to use either a monolith type separation filter or a tubular type separation filter. The "tubular type" is in reference to a shape that includes a single cell extending through the membrane structure in the longitudinal direction.

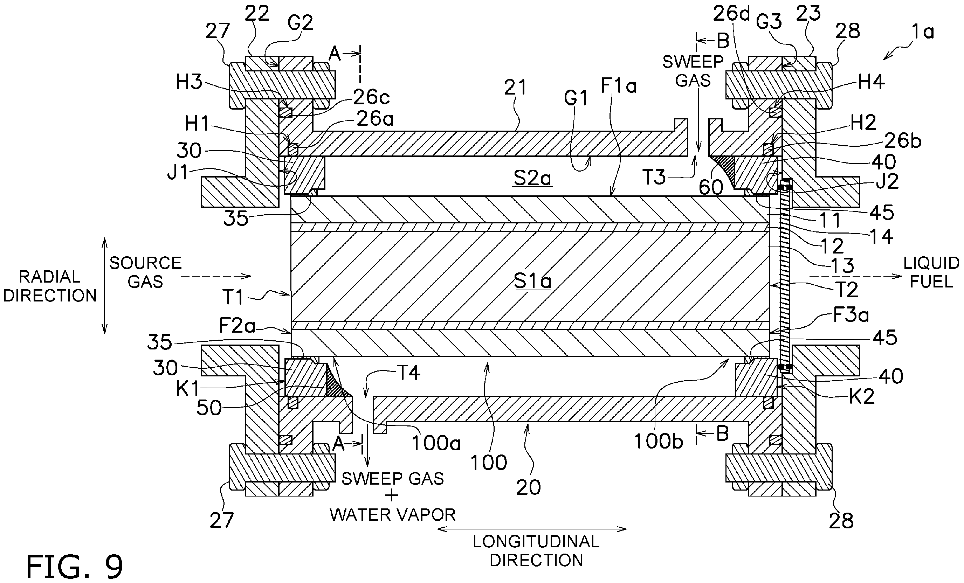

FIG. 9 is a schematic cross-sectional view showing a configuration of a separation membrane module 1a that includes a tubular type reactor 100.

The separation membrane module 1a differs from the separation membrane module 1 according to the above embodiment in that the separation membrane module 1a includes the reactor 100 instead of the reactor 10 and does not include the flow stopper 70. The following mainly describes the differences.

The reactor 100 is housed in the housing 20. The reactor 100 is has a columnar shape extending in the longitudinal direction. The external shape of the reactor 100 is not particularly limited, and may be a circular column shape, an elliptical column shape, or a polygonal column shape, for example.

As shown in FIG. 9, the reactor 100 has an outer circumferential surface F1a, a first end surface F2a, and a second end surface F3a. The outer circumferential surface F1a is a side surface of the columnar reactor 100. The outer circumferential surface F1a continues to the first end surface F2a and the second end surface F3a. The first end surface F2a is an end surface of the columnar reactor 100. A first opening T1 is formed in the first end surface F2a. The source gas flows into the reactor 100 via the first opening T1. The second end surface F3a is another end surface of the columnar reactor 100. A second opening T2 is formed in the second end surface F3a. The liquid fuel flows out of the reactor 100 via the second opening T2.

The reactor 100 includes a first end portion 100a and a second end portion 100b. The first end portion 100a is an end portion of the reactor 100 in the longitudinal direction. The first end portion 100a includes the first end surface F2a described above. The second end portion 100b is another end portion of the reactor 100 in the longitudinal direction. The second end portion 100b includes the second end surface F3a described above.

Here, the reactor 100 is constituted by a porous support 11, a separation membrane 12, a catalyst 13, and a catalyst stopper 14.

The separation membrane 12 is formed on an inner circumferential surface of the porous support 11. The separation membrane 12 is supported by the porous support 11. The separation membrane 12 has a tubular shape extending in the longitudinal direction. The inside of the separation membrane 12 is a non-permeation-side space S1a to which the source gas is supplied. The non-permeation-side space S1a is a space between the first opening T1 and the second opening T2. In this variation, the separation membrane 12 is disposed on the inner surface of the porous support 11, but the separation membrane 12 may also be disposed on the outer surface of the porous support 11. Water vapor passing through the separation membrane 12 in this variation is an example of the "permeating gas" in the present invention.

In the reactor 100, the source gas supplied to the supply space S1 is converted into the liquid fuel due to the action of the catalyst 13, and water vapor, which is one of the products generated as a result of the conversion reaction, passes through the separation membrane 12.

The water vapor that has passed through the separation membrane 12 passes through the porous support 11 and then flows out from the outer circumferential surface F1a into a permeation-side space S2a. The water vapor that has flowed into the permeation-side space S2a is discharged to the outside from the sweep gas outlet T4 together with the sweep gas supplied from the sweep gas inlet T3 to the permeation-side space S2a.

The permeation-side space S2a is a space between the inner circumferential surface G1 and the outer circumferential surface F1a. The flow stopper 70 described in the above embodiment is not disposed in the permeation-side space S2a. Therefore, the sweep gas flows from the sweep gas inlet T3 toward the sweep gas outlet T4 along the outer circumferential surface F1a while taking on water vapor.

The catalyst stopper 14 is configured as described in the above embodiment.

In this variation as well, the separation membrane module 1a includes the first flow regulation portion 50 and the second flow regulation portion 60 described in the above embodiment.

The first flow regulation portion 50 regulates flows of the sweep gas to be discharged from the permeation-side space S2a. The first flow regulation surface H1 regulates flows of the sweep gas between the sweep gas outlet T4 and the outer circumferential surface F1a from which water vapor flows out. Thus, flowability of the sweep gas from the outer circumferential surface F1a toward the sweep gas outlet T4 can be improved.

The second flow regulation portion 60 regulates flows of the sweep gas supplied to the permeation-side space S2a. The second flow regulation surface H2 regulates flows of the sweep gas between the sweep gas inlet T3 and the outer circumferential surface F1a from which water vapor flows out. Thus, flowability of the sweep gas from the sweep gas inlet T3 toward the outer circumferential surface F1a can be improved.

Regulation of flows of the sweep gas by the first flow regulation portion 50 and the second flow regulation portion 60 in the separation membrane module 1a including the tubular type reactor 100 has been described with reference to FIG. 9. However, the first flow regulation portion 50 and the second flow regulation portion 60 may also be configured to regulate flows of the source gas.

Specifically, in the case where the separation membrane 12 is provided on the outer circumferential surface of the porous support 11, it is preferable that the source gas is supplied to the space S2a via the inlet T3, and the liquid fuel is discharged from the space S2a via the outlet T4. With this configuration, it is possible to suppress the occurrence of a situation in which the separation membrane 12 peels off from the porous support 11, due to the supply pressure of the source gas, and consequently, durability of the reactor 100 can be improved. In this case, flows of the source gas supplied from the inlet T3 are regulated by the second flow regulation portion 60, and thus, the source gas is smoothly supplied to the outer circumferential surface F1a of the reactor 100. Also, flows of the liquid fuel from the outer circumferential surface F1a of the reactor 100 toward the outlet T4 are regulated by the first flow regulation portion 50, and thus, the liquid fuel is smoothly discharged from the outlet T4. As described above, the first flow regulation portion 50 and the second flow regulation portion 60 are useful in regulating flows of various types of gas. Note that, in the case where the source gas is supplied to the space S2a, the catalyst 13 is disposed in the space S2a.

### Variation 9

In the separation membrane module 1 (see FIG. 1) according to the above embodiment, the sweep gas inlet T3 and the sweep gas outlet T4 are diagonally opposite to each other in a side view, but there is no limitation to this configuration.

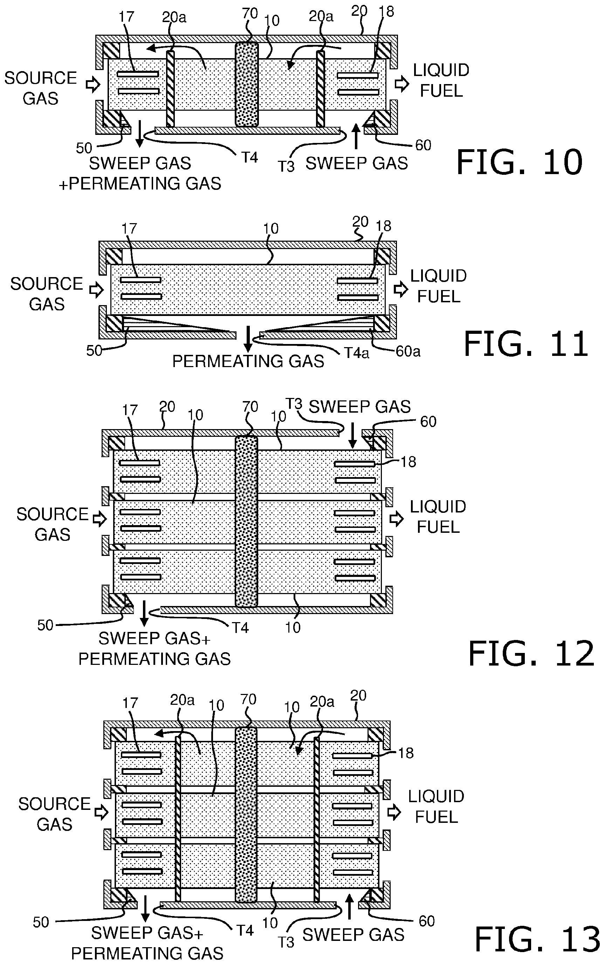

For example, as shown in FIG. 10, the sweep gas inlet T3 and the sweep gas outlet T4 may be provided on the same side of the reactor 10 in a side view, and partition plates 20a that partially block the space between the reactor 10 and the housing 20 may be provided. In the example shown in FIG. 10, a partition plate 20a is provided on each side of the flow stopper 70. The sweep gas inlet T3-side partition plate 20a divides the sweep gas inlet T3-side space into a space in which the sweep gas mainly flows into the second slits 18 of the reactor 10 and a space in which the sweep gas flows into the reactor 10 from its side surface. The sweep gas outlet T4-side partition plate 20a divides the sweep gas outlet T4-side space into a space in which the sweep gas mainly flows out from the first slits 17 of the reactor 10 and a space in which the sweep gas flows out from the side surface of the reactor 10. However, the number and positions of partition plates 20a can be suitably set. Also, a portion of the sweep gas may pass through the flow stopper 70.

As shown in FIG. 11, a configuration is also possible in which the housing 20 does not have the sweep gas inlet T3 and only has a permeating gas outlet T4a, and the sweep gas is not supplied into the housing 20. In this case, the flow stopper 70 is unnecessary. Permeating gas that has passed through the separation membrane 12 of the reactor 10 flows out from the first and second slits 17 and 18, and then flows out from the permeating gas outlet T4a to the outside of the housing 20. At this time, the first flow regulation portion 50 regulates flows of the permeating gas between the first slits 17 and the permeating gas outlet T4a. Likewise, a third flow regulation portion 60a regulates flows of the permeating gas between the second slits 18 and the permeating gas outlet T4a. Thus, flowability of the permeating gas inside the housing 20 can be improved. As described above, the present invention is effective even in cases where no sweep gas is used.

Note that the configurations shown in FIGS. 10 and 11 are also applicable to a case where a separation filter is used as the membrane structure instead of the reactor 10.

### Variation 10

In the separation membrane module 1 (see FIG. 1) according to the above embodiment, only one reactor 10 is housed in the housing 20, but there is no limitation to this configuration.

For example, a plurality of reactors 10 may be housed in the housing 20 as shown in FIG. 12.

Also, partition plates 20a that partially block the space between the reactors 10 and the housing 20 may be provided as shown in FIG. 13. In the example shown in FIG. 13, a partition plate 20a is provided on each side of the flow stopper 70. The sweep gas inlet T3-side partition plate 20a divides the sweep gas inlet T3-side space into a space in which the sweep gas mainly flows into the second slits 18 of the reactors 10 and a space in which the sweep gas flows into the reactors 10 from their side surfaces. The sweep gas outlet T4-side partition plate 20a divides the sweep gas outlet T4-side space into a space in which the sweep gas mainly flows out from the first slits 17 of the reactors 10 and a space in which the sweep gas flows out from the side surfaces of the reactors 10. However, the number and positions of partition plates 20a can be suitably set. Also, a portion of the sweep gas may pass through the flow stopper 70. Note that the sweep gas inlet T3 and the sweep gas outlet T4 may be provided on the same side of the reactors 10 in a side view as shown in FIG. 13.

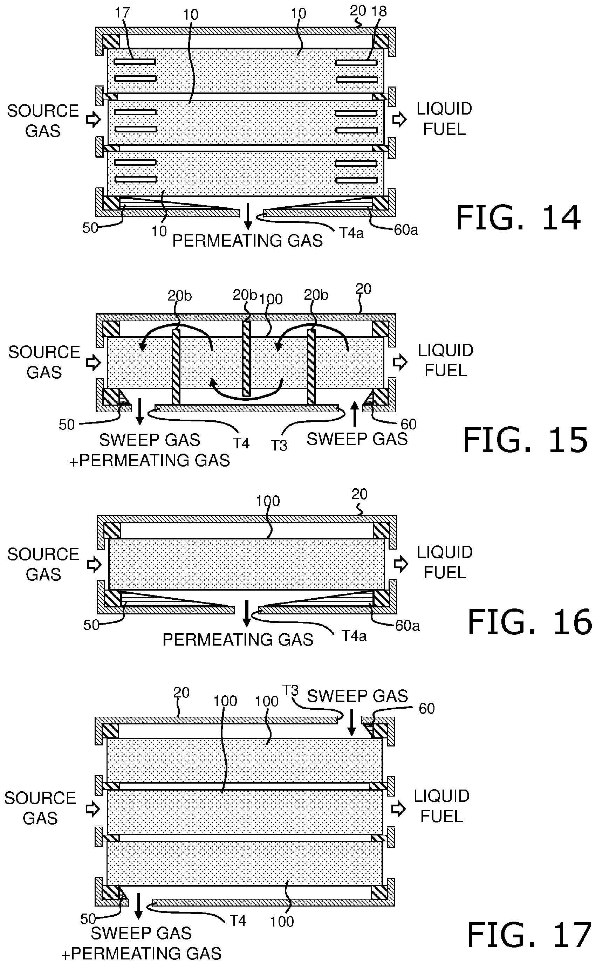

As shown in FIG. 14, a configuration is also possible in which the housing 20 does not have the sweep gas inlet T3 and only has the permeating gas outlet T4a, and the sweep gas is not supplied to the housing 20. In this case, the flow stopper 70 is unnecessary. Permeating gas that has passed through the separation membrane 12 in each reactor 10 flows out from the first and second slits 17 and 18 of the reactors 10, and then flows out from the permeating gas outlet T4a to the outside of the housing 20. At this time, the first flow regulation portion 50 regulates flows of the permeating gas between the first slits 17 and the permeating gas outlet T4a. Likewise, the third flow regulation portion 60a regulates flows of the permeating gas between the second slits 18 and the permeating gas outlet T4a. Thus, flowability of the permeating gas inside the housing 20 can be improved.

Note that the configurations shown in FIGS. 12 to 14 are also applicable to a case where separation filters are used as membrane structures instead of the reactors 10.

### Variation 11

In the separation membrane module 1a (see FIG. 9) according to Variation 8 described above, the sweep gas inlet T3 and the sweep gas outlet T4 are diagonally opposite to each other in a side view, and the sweep gas flows from the sweep gas inlet T3 toward the sweep gas outlet T4, but there is no limitation to this configuration.

For example, as shown in FIG. 15, the sweep gas inlet T3 and the sweep gas outlet T4 may be provided on the same side of the reactor 100 in a side view, and partition plates 20b that partially block the space between the reactor 100 and the housing 20 may be provided. Three partition plates 20b are provided in the example shown in FIG. 15, but the number of partition plates 20b may be one, two, or four or more. Positions of the partition plates 20b can be suitably set.

As shown in FIG. 16, a configuration is also possible in which the housing 20 does not have the sweep gas inlet T3 and only has the permeating gas outlet T4a, and the sweep gas is not supplied to the housing 20. Permeating gas that has passed through the separation membrane 12 in the reactor 100 flows out from the outer circumferential surface F1a of the reactor 100, and then flows out from the permeating gas outlet T4a to the outside of the housing 20. At this time, the first flow regulation portion 50 regulates flows of the permeating gas between the outer circumferential surface F1a and the permeating gas outlet T4a. Likewise, the third flow regulation portion 60a regulates flows of the permeating gas between the outer circumferential surface F1a and the permeating gas outlet T4a. Thus, flowability of the permeating gas inside the housing 20 can be improved.

Note that the configurations shown in FIGS. 15 and 16 are also applicable to a case where a separation filter is used as the membrane structure instead of the reactor 100.

### Variation 12

In the separation membrane module 1a (see FIG. 9) according to Variation 8 described above, only one reactor 100 is housed in the housing 20, but there is no limitation to this configuration.

For example, a plurality of reactors 100 may be housed in the housing 20 as shown in FIG. 17.

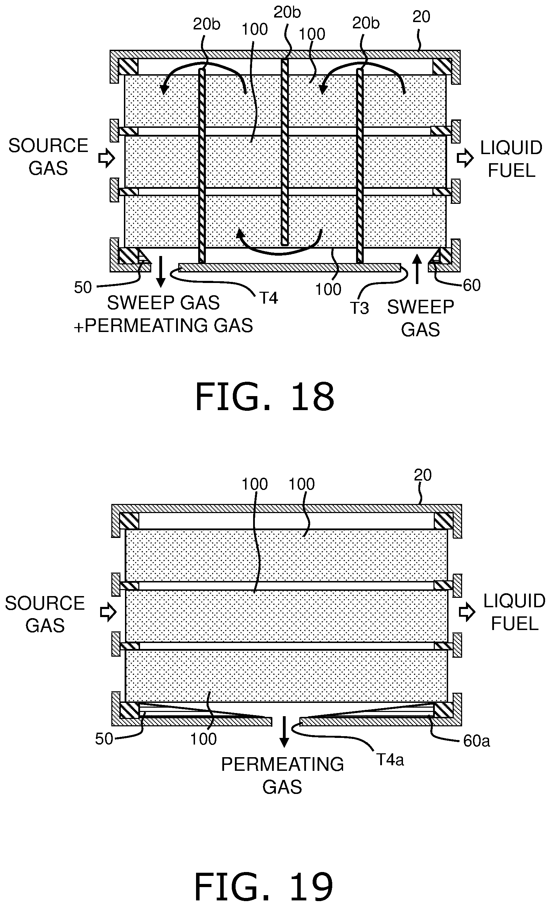

Also, partition plates 20b that partially block the space between the reactors 100 and the housing 20 may be provided as shown in FIG. 18. Three partition plates 20b are provided in the example shown in FIG. 18, but the number of partition plates 20b may be one, two, or four or more. Positions of the partition plates 20b can be suitably set. Note that the sweep gas inlet T3 and the sweep gas outlet T4 may be provided on the same side of the reactors 100 in a side view as shown in FIG. 18.

As shown in FIG. 19, a configuration is also possible in which the housing 20 does not have the sweep gas inlet T3 and only has the permeating gas outlet T4a, and the sweep gas is not supplied to the housing 20. Permeating gas that has passed through the separation membrane 12 in each reactor 100 flows out from the outer circumferential surfaces F1a of the reactors 100, and then flows out from the permeating gas outlet T4a to the outside of the housing 20. At this time, the first flow regulation portion 50 regulates flows of the permeating gas between the outer circumferential surface F1a and the permeating gas outlet T4a. Likewise, the third flow regulation portion 60a regulates flows of the permeating gas between the outer circumferential surfaces F1a and the permeating gas outlet T4a. Thus, flowability of the permeating gas inside the housing 20 can be improved.

Note that the configurations shown in FIGS. 17 to 19 are also applicable to a case where separation filters are used as membrane structures instead of the reactors 100.

### REFERENCE SIGNS LIST

- 1: Separation membrane module
- 10: Reactor
- F1: Outer circumferential surface
- F2: First end surface
- F3: Second end surface
- 20: Housing
- 21: Tubular body
- G1: Inner circumferential surface
- G2: First end surface
- G3: Second end surface
- 22: First end plate
- 23: Second end plate
- 30: First flange
- 40: Second flange
- 50: First flow regulation portion
- H1: First flow regulation surface
- 60: Second flow regulation portion
- H2: Second flow regulation surface
- 70: Flow stopper

## Claims

1. A separation membrane module comprising:
a tubular housing;
a monolith type membrane structure housed in the housing; and
a first flow regulation portion housed in the housing, wherein
the housing has an inner circumferential surface and a first opening formed in the inner circumferential surface and configured to allow a sweep gas to flow therethrough,
the membrane structure has an outer circumferential surface and a first slit formed in the outer circumferential surface and configured to allow the sweep gas to flow therethrough, and
the first flow regulation portion has a first flow regulation surface configured to regulate a flow of the sweep gas between the first opening and the first slit.

2. A separation membrane module comprising:
a tubular housing;
a monolith type membrane structure housed in the housing; and
a first flow regulation portion housed in the housing, wherein
the membrane structure has an outer circumferential surface and a first slit formed in the outer circumferential surface and configured to allow a permeating gas that has passed through a separation membrane to flow out,
the housing has an inner circumferential surface and a first opening formed in the inner circumferential surface and configured to allow the permeating gas to flow out, and
the first flow regulation portion has a first flow regulation surface configured to regulate a flow of the permeating gas between the first opening and the first slit.

3. A separation membrane module comprising:
a tubular housing;
a tubular type membrane structure housed in the housing; and
a first flow regulation portion housed in the housing, wherein
the membrane structure has an outer circumferential surface,
the housing has an inner circumferential surface and a first opening formed in the inner circumferential surface and configured to allow a gas to flow therethrough, and
the first flow regulation portion has a first flow regulation surface configured to regulate a flow of the gas between the first opening and the outer circumferential surface.

4. . The separation membrane module according to any one of claims 1 to 3, wherein
the first flow regulation surface is shaped so as to be farther from the first opening in a longitudinal direction of the membrane structure the closer the first flow regulation surface is to the membrane structure in a radial direction of the membrane structure.

5. . The separation membrane module according to any one of claims 1 to 3, further comprising an annular first flange surrounding a first end portion of the membrane structure, wherein
the first flow regulation portion is connected to the first flange.

6. . The separation membrane module according to claim 5, wherein
the first flow regulation portion and the first flange are formed as a single piece.

7. . The separation membrane module according to claim 5, wherein
the first flange is constituted by a ceramic material.

8. . The separation membrane module according to claim 1, further comprising a second flow regulation portion housed in the housing, wherein
the housing has a second opening formed in the inner circumferential surface and configured to allow the sweep gas to flow therethrough,
the membrane structure has a second slit formed in the outer circumferential surface and configured to allow the sweep gas to flow therethrough, and
the second flow regulation portion has a second flow regulation surface configured to regulate a flow of the sweep gas between the second opening and the second slit.

9. . The separation membrane module according to claim 3, further comprising a second flow regulation portion housed in the housing, wherein
the housing has a second opening formed in the inner circumferential surface and configured to allow the gas to flow therethrough, and
the second flow regulation portion has a second flow regulation surface configured to regulate a flow of the gas between the second opening and the outer circumferential surface.

10. . The separation membrane module according to claim 8 or 9, wherein
the second flow regulation surface is shaped so as to be farther from the second opening in a longitudinal direction of the membrane structure the closer the second flow regulation surface is to the membrane structure in a radial direction of the membrane structure.

11. . The separation membrane module according to claim 8 or 9, further comprising an annular second flange surrounding a second end portion of the membrane structure, wherein
the second flow regulation portion is connected to the second flange.

12. . The separation membrane module according to claim 11, wherein
the second flow regulation portion and the second flange are formed as a single piece.

13. . The separation membrane module according to claim 11, wherein
the second flange is constituted by a ceramic material.

14. . The separation membrane module according to any one of claims 1 to 3, wherein
the membrane structure is a reactor.

15. . The separation membrane module according to any one of claims 1 to 3, wherein
the membrane structure is a separation filter.
